(19) Europäisches Patentamt
European Patent Office
Office européen des brevets

(11) Veröffentlichungsnummer: **0 327 700 B1**

(12) # EUROPÄISCHE PATENTSCHRIFT

(45) Veröffentlichungstag der Patentschrift: **25.11.92**

(51) Int. Cl.$^5$: **C08G 69/32**, C08G 69/48

(21) Anmeldenummer: **88120250.1**

(22) Anmeldetag: **05.12.88**

(54) **Formmassen bestehend aus einem thermoplastisch verarbeitbaren, aromatischen Polyamid.**

(30) Priorität: **12.02.88 DE 3804401**

(43) Veröffentlichungstag der Anmeldung:
**16.08.89 Patentblatt 89/33**

(45) Bekanntmachung des Hinweises auf die Patenterteilung:
**25.11.92 Patentblatt 92/48**

(84) Benannte Vertragsstaaten:
**AT BE CH DE FR GB IT LI NL**

(56) Entgegenhaltungen:
**DE-A- 2 402 930**
**DE-A- 3 609 011**
**DE-A-53 609 011**
**US-A- 3 627 737**

(73) Patentinhaber: **HÜLS AKTIENGESELLSCHAFT**
**Patentabteilung / PB 15 - Postfach 13 20**
**W-4370 Marl 1(DE)**

(72) Erfinder: **Finke, Jürgen, Dr.**
**Am Alten Sportplatz 17 a**
**W-4370 Marl(DE)**
Erfinder: **Bartmann, Martin, Dr.**
**Burgstrasse 35**
**W-4350 Recklinghausen(DE)**
Erfinder: **Mügge, Joachim, Dr.**
**Droste-Hülshoff-Strasse 17**
**W-4358 Haltern(DE)**
Erfinder: **Schmidt, Friedrich-Georg, Dr.**
**Kriegerweg 32**
**W-4400 Münster(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 327 700 B1

**Beschreibung**

Gegenstand der Erfindung sind Formmassen bestehend aus einem thermoplastisch verarbeitbaren, aromatischen Polyamid.

Aromatische Polyamide, die Diamine der allgemeinen Formel

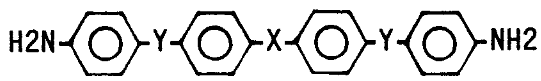

sind bekannt (s. z. B. DE-OS 36 09 011). Die Schmelzviskosität dieser aromatischen Polyamide ist allerdings sehr hoch. Daher sind bei ihrer Herstellung und Verarbeitung sehr hohe Temperaturen erforderlich - im allgemeinen mindestens 350 °C. Bei diesen Temperaturen wird häufig eine Schädigung des Produkts beobachtet, erkennbar an Verfärbungen oder einer Verschlechterung der mechanischen Eigenschaften.

Das Dokument US-A 3 627 737 offenbart aromatische Polyamide, welche geringe Mengen an Formamiden enthalten, die in einem Lösungemittel mittels Phasengrenz- oder Lösungspolykondensation hergestellt und anschließend aus einer Lösung zu einem Filament verarbeitet werden.

Gemäß DE-A 24 02 930 werden aromatische Oligoamide als Zusatzstoffe zur Verlangsamung der Gelbildung bei geschmolzenen Polyamiden eingesetzt.

Ein weiterer Nachteil ist die Empfindlichkeit dieser Polyamide gegen über hydrolytischem Abbau, hervorgerufen durch eine hohe Wasserauf nahme. Um dies zu verhindern, sind bei der Verarbeitung zusätzliche Maßnahmen - wie z. B. Trocknung - erforderlich.

Aufgabe der Erfindung war es, Formmassen auf Basis aromatischer Polyamide zur Verfügung zu stellen, die die geschilderten Nachteile der Produkte des Standes der Technik nicht aufweisen.

Die Aufgabe wurde gelöst durch aromatische Polyamide enthaltend die Reste nachstehender Ausgangskomponenten:

A. HOOC - Ar - COOH
B. H2N - Ar' - NH2
C. R' - CONH - R"

hierbei bedeutet

Ar: 1.3- oder 1.4-Phenylen; 1.4-, 1.5-, 2.6- oder 2.7-Naphthylen,

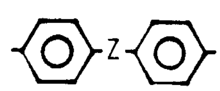

oder

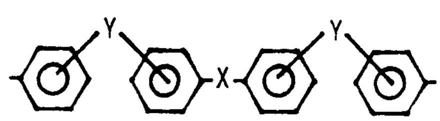 ;

Ar': 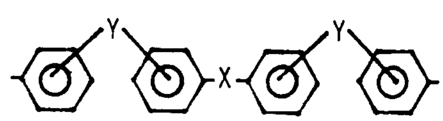 ;

X: $-SO_2$; -CO-;
Y: -O-; -S-;
Z: -O-; -S-; $-SO_2-$; -CO-; $-CR_2-$;
R: -H; $C_1$ - $C_4$-Alkyl;
R′, R″:

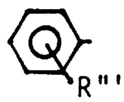 ;

1- bzw. 2-Naphthyl; $C_1$ - $C_{20}$-Alkyl $R'$ und $R''$ können gleich oder verschieden sein;

$R'''$: -H; $C_1$ - $C_4$-Alkyl; Halogen,

wobei die Komponente C. zu 0,01 bis 10 Mol-% - bezogen auf die Summe der Komponenten A. und B. in dem Polyamid enthalten ist.

Die erfindungsgemäße Komponente C. stellt ein niedermolekulares aliphatisches, araliphatisches oder aromatisches Carbonsäureamid dar. Hierbei kann der aromatische Rest durch Halogen oder durch $C_1$- bis $C_4$-Alkylreste substituiert sein.

Bevorzugt eingesetzt werden als aliphatische Carbonsäureamide Essigsäure-N-ethylamid, Buttersäure-N-ethylamid, Buttersäure-N-decylamid oder Propionsäure-N-octylamid,
als araliphatische Carbonsäureamide Benzoesäure-N-butylamid, Tolylsäure-N-butylamid, Buttersäure-N-phenylamid,
sowie als aromatische Carbonsäureamide Benzanilid, 4-Chlorbenzoesäureanilid, Tolylanilid, Benzoesäure-N-(4.4'-phenoxy)diphenylsulfonamid, 2-Naphthalincarbonsäureanilid.

Es ist aber auch möglich, die niedermolekularen Carbonsäureamide mit Hilfe amidbildender Verbindungen in der Reaktionsmischung selbst in situ herzustellen. Hierbei werden amidbildende Verbindungen, wie aromatische Carbonsäuren, z. B. Benzoesäure, Naphthalincarbonsäure oder Chlorbenzoesäure, und/oder aliphatische Carbonsäuren mit 1 - 20 C-Atomen mit aromatischen Aminen, z. B. Anilin, Chloranilin, Naphthylamin, 4-(4-Aminophenoxy)diphenylsulfon, und/oder aliphatischen Aminen mit 4 bis 20 C-Atomen zur Reaktion gebracht. Carbonsäure und Amin werden bevorzugt in äquimolaren Mengen eingesetzt.

Als aromatische Dicarbonsäuren (Komponente A.) werden Isophthalsäure, Terephthalsäure, 1.4-, 1.5-, 2.6-, 2.7-Naphthalindicarbonsäure, 4.4'-Diphenyletherdicarbonsäure oder 4.4'-Benzophenondicarbonsäure, 4,4'-Diphenylsulfondicarbonsäure, 2-Phenoxy-terephthalsäure oder Gemische davon eingesetzt.

Als aromatische Diamine (Komponente B.) kommen z. B. 4,4'-Bis(4-aminophenoxy)diphenylsulfon, 4,4'-Bis(3-aminophenoxy)diphenylsulfon, 4,4'-Bis(4-aminophenoxy)benzophenon, 4,4'-Bis(3-aminophenoxy)-benzophenon, 4,4'-Bis(p-aminophenylmercapto)benzophenon, 4,4'-Bis(p-aminophenylmercapto)-diphenylsulfon oder Gemische davon infrage.

Bevorzugt eingesetzt werden Isophthalsäure; 4,4'-Bis(4-aminophenoxy)diphenylsulfon; Benzanilid.

Das molare Einsatzverhältnis der Komponenten A. und B. bewegt sich im Bereich von etwa 1 : 1. Die erfindungsgemäße Komponente C. ist zu 0,01 bis 10 Mol-%, vorzugsweise 0,05 bis 8 Mol-%, - bezogen auf die Summe von A. und B. - in dem Polyamid enthalten.

Die Glastemperatur ($T_g$) der erfindungsgemäßen Polyamide liegt im Bereich von 190 bis 270 °C, die Viskositätszahlen (J-Werte) bei etwa 30 bis 90 $cm^3/g$; bevorzugt bei 60 bis 80 $cm^3/g$.

Die Herstellung aromatischer Polyamide ist bekannt und wird z. B. in DE-OS 36 09 011 beschrieben.

Das Carbonsäureamid wird bevorzugt gemeinsam mit den Monomeren eingesetzt. Es ist aber auch möglich, dieses erst gegen Ende der Polykondensation nach Erreichen der gewünschten Viskositätszahl zuzusetzen.

Zur Erhöhung des Molekulargewichtes können die aromatischen Polyamide einer Festphasennachkondensation in einer Inertgasatmosphäre unterzogen werden.

Die Polyamide können auf üblichen Maschinen durch Spritzguß oder Extrusion zu den erfindungsgemäßen Formmassen verarbeitet werden.

Die Formmassen können zusätzlich noch Füllstoffe, wie Talkum, oder Verstärkungsmittel, wie Glas-, ARAMID®- oder Kohlefasern, sowie andere übliche Zusätze, wie z. B. Pigmente oder Stabilisatoren, enthalten.

Die Formmassen werden nach üblichen Verfahren wie Spritzguß, Extrusion o. ä. zu Formteilen, Fasern, Folien usw. verarbeitet. Ebenso ist die Verwendung als Beschichtungsmittel ausgehend vom Pulver (z. B. Wirbelsinterverfahren), einer flüssigen Dispersion oder einer Lösung möglich.

Die erfindungsgemäßen Formmassen zeigen eine ausgezeichnete Schmelzviskosität, so daß sie im Vergleich zu anderen, bereits bekannten aromatische Polyamide enthaltenden Formmassen sich deutlich einfacher verarbeiten lassen. Insbesondere überraschend ist die Tatsache, daß die Polyamide eine sehr gute Hydrolysestabilität aufweisen und daher keiner aufwendigen Zusatzmaßnahmen gegen Feuchtigkeitseinfluß bei der Verarbeitung bedürfen.

Die in der Beschreibung und in den Beispielen genannten Parameter wurden mit Hilfe nachstehender Verfahren bestimmt.

Die DSC-Untersuchungen zur Ermittlung der Glastemperatur ($T_g$) wurden an einem Perkin-Elmer-Calorimeter DSC-1B bei einer Aufheizgeschwindigkeit von 16 ° K/min durchgeführt.

Die Viskositätszahlen (J) wurden an 0,5 Gew.-%igen Lösungen der Polymeren in einem Phenol/o-Dichlorbenzol-Gemisch (1 : 1 Gewichtsteile) bei 25 ° C nach DIN 53 728 bestimmt.

Die MVI-Werte wurden an einem Göttfert-Viskosimeter bei 320 ° C und 21,6 kg Last nach DIN 53 735-MFI-B gemessen. -

Mit Buchstaben gekennzeichnete Beispiele sind nicht erfindungsgemäß.

Beispiele

Beispiel 1

21,62 g (0,05 Mol) 4,4′-Bis(4-aminophenoxy)diphenylsulfon, 8,31 g (0,05 Mol) Isophthalsäure und 0,49 g (0,0025 Mol) Benzanilid wurden mit 155 mg (0,0005 Mol) Triphenylphosphit und 61 mg (0,005 Mol) 4-N,N-Dimethylaminopyridin in einem Polykondensationsreaktor mit Rührer, Stickstoffeinleitung und Destillationsbrücke bei 250 ° C aufgeschmolzen. Die Temperatur wurde nach 20 Minuten auf 300 ° C erhöht. Dabei nahm die Viskosität der Schmelze stetig zu, während das im Verlauf der Reaktion freiwerdende Wasser abdestilliert wurde. Nach 10 Minuten wurde die Temperatur auf 320 ° C erhöht und 50 Minuten dort gehalten.

Die Viskositätszahl (J) betrug 50 $cm^3/g$. Der Schmelzviskositätsindex (MVI) wurde mit 15,4 $cm^3/10$ min gemessen.

Beispiel A

21,62 g (0,05 Mol) 4,4′-Bis(4-aminophenoxy)diphenylsulfon und 8,31 g (0,05 Mol) Isophthalsäure wurde mit 155 mg (0,0005 Mol) Triphenylphosphit und 61 mg (0,0005 Mol) 4-N,N-Dimethylaminopyridin analog Beispiel 1 umgesetzt. Bereits nach 30 Minuten bei 320 ° C konnte infolge extremer Schmelzviskositätszunahme nicht mehr gerührt werden. Die Viskositätszahl (J) betrug 98 $cm^3/g$. Der Schmelzviskositätsindex konnte infolge der hohen Schmelzviskosität nicht gemessen werden.

Beispiel 2

21,62 g (0,05 Mol) 4,4′-Bis-(4-aminophenoxy)diphenylsulfon, 8,31 g (0,05 Mol) Isophalsäure und 1,00 g (0,005 Mol) Benzanilid wurden in Gegenwart von 155 mg (0,0005 Mol) Triphenylphosphit und 61 mg (0,0005 Mol) 4-N,N-Dimethylaminopyridin analog Beispiel 1 umgesetzt.
J: 37 $cm^3/g$
MVI: 173,5 $cm^3/g$.

Beispiel 3

21,62 g (0,05 Mol) 4.4′-Bis(4-aminophenoxy)diphenylsulfon, 8,31 g (0,05 Mol) Isophthalsäure und 0,64 g (0,0012 Mol) Stearinsäurestearylamid wurden mit 155 mg (0,0005 Mol) Triphenylphosphit und 61 mg (0,0005 Mol) 4-N,N-Dimethylaminopyridin in der in Beispiel 1 beschriebenen Apparatur 20 Minuten bei 250 ° C, 10 Minuten bei 300 ° C und 30 Minuten bei 320 ° C gerührt.
J: 42 $cm^3/g$.

Beispiel 4

21,62 g (0,05 Mol) 4,4′-Bis(4-aminophenoxy)diphenylsulfon, 8,31 g (0,05 Mol) Isophthalsäure, 0,30 g (0,002 Mol) Benzoesäure und 0,23 g (0,0025 Mol) Anilin wurden mit 155 mg (0,005 Mol) Triphenylphosphit und 61 mg (0,005 Mol) 4-N,N-Dimethylaminopyridin analog Beispiel 3 umgesetzt.
J: 66 $cm^3/g$.

**Patentansprüche**

1. Formmasse bestehend aus einem thermoplastisch verarbeitbaren, aromatischen Polyamid enthaltend die Reste nachstehender Ausgangskomponenten:
   A. HOOC - Ar - COOH

B. $H_2N$ - Ar′ - $NH_2$
C. R′ - CONH - R″

hierbei bedeutet

Ar: 1.3- oder 1.4-Phenylen; 1.4-, 1.5-, 2.6- oder 2.7-Naphthylen,

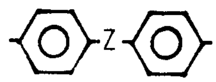

oder

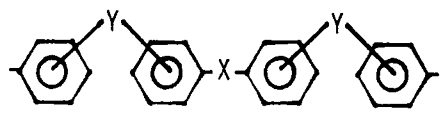 ;

Ar': 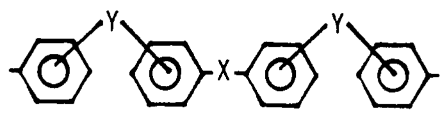 ;

X: $-SO_2-$ -CO-;
Y: -O-;-S-;
Z: -O-; -S-; $-SO_2-$; -CO-; $-CR_2-$;
R: -H; $C_1$ - $C_4$-Alkyl;
R′, R″:

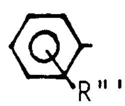 ;

1- bzw. 2-Naphthyl; $C_1$ - $C_{20}$-Alkyl R′ und R″ können gleich oder verschieden sein;
R‴: -H; $C_1$ - $C_4$-Alkyl; Halogen,

wobei die Komponente C. zu 0,01 bis 10 Mol-% - bezogen auf die Summe der Komponenten A. und B. - in dem Polyamid enthalten ist.

**2.** Formmasse gemäß Anspruch 1 mit der Bedeutung von
Ar: 1.3-Phenylen.

**3.** Formmasse gemäß Anspruch 1 und 2 mit der Bedeutung von

Ar': 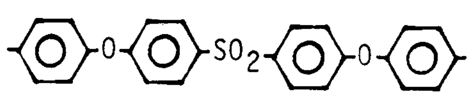

**4.** Formmasse gemäß den Ansprüchen 1 bis 3 mit der Bedeutung von

R' = R" = 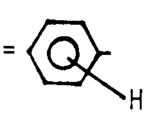

**5.** Formmasse gemäß den Ansprüchen 1 bis 4 in der die Komponente C. zu 0,5 bis 8 Mol-% in dem Polyamid enthalten ist.

## Claims

**1.** A moulding composition composed of a thermoplastic, aromatic polyamide containing the radicals of the starting components below:

A. HOOC-Ar-COOH

B. $H_2N$-Ar'-$NH_2$

C. R'-CONH-R"

in which the symbols have the following meanings:

Ar: 1,3- or 1,4-phenylene; 1,4-, 1,5-, 2,6- or 2,7-naphthylene,

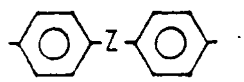

or

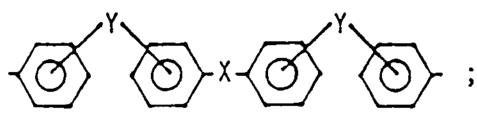

Ar':

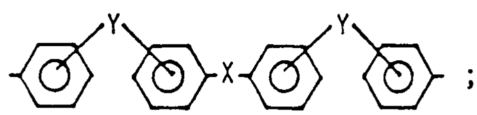

X: -$SO_2$; -CO-;

Y: -O-; -S-;

Z: -O-; -S-; -$SO_2$-; -CO-; -$CR_2$-;

R: -H; $C_1$-$C_4$-alkyl;

R' and R":

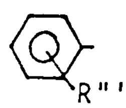

;

1- or 2-naphthyl; $C_1$-$C_{20}$-alkyl R' and R" may be identical or different;

R"': -H; $C_1$-$C_4$-alkyl; halogen,

where the polyamide contains from 0.01 to 10 mol % of component C., based on the sum of components A. and B.

**2.** A moulding composition according to claim 1, in which Ar is 1,3-phenylene.

**3.** A moulding composition according to claim 1 or 2, in which

Ar' is

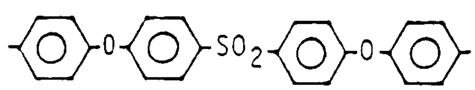

**4.** A moulding composition according to any of claims 1 to 3, in which

R'=R" = 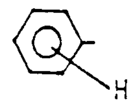

5. A moulding composition according to any of claims 1 to 4, in which the polyamide contains from 0.5 to 8 mol % of component C.

## Revendications

1. Masse à mouler constituée par une polyamide aromatique pouvant être façonnée par thermoplastie, renfermant les radicaux des composants de départ ci-après :
   A. HOOC - Ar - COOH
   B. $H_2N$ - Ar' - $NH_2$
   C. R' - CONH - R"
   Ar représente un radical 1,3- ou 1,4-phénylène ; 1,4-, 1,5-, 2,6- ou 2,7-naphtylène,

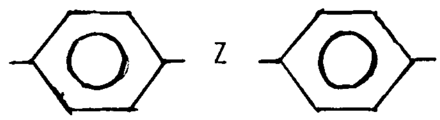

ou

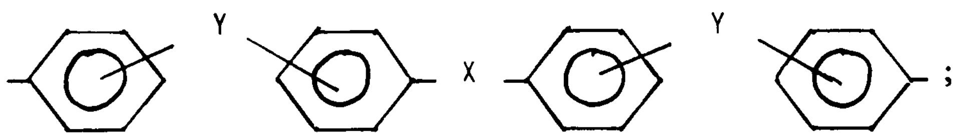

Ar' représente un radical

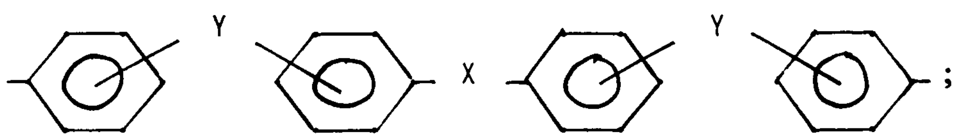

X : -$SO_2$ ; -CO- ;
Y : -O- ; -S- ;
Z : -O-, -S-, -$SO_2$- ; -CO- ; -$CR_2$- ;
R : -H ; $C_1$ - $C_4$-alkyle ;
R', R" :

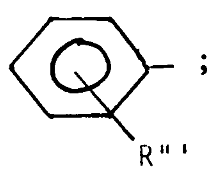

1- ou 2-naphtyle ; $C_1$ - $C_{20}$-alkyle ; R' et R" pouvant être identiques ou différents ;
R"' : -H ; $C_1$ - $C_4$-alkyle ; halogène,
le composant C étant contenu dans la polyamide à raison de 0,01 à 10 mol.-% relativement à la somme des composants A. et B.

2. Masse à mouler selon la revendication 1, Ar représentant un radical 1,3-phénylène

3. Masse à mouler selon les revendications 1 et 2, Ar' représentant le radical

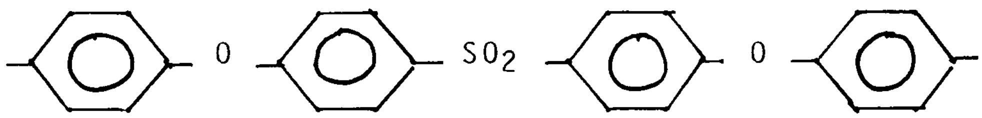

4. Masse à mouler selon les revendications 1 à 3, R' et R" étant identiques et représentant le radical

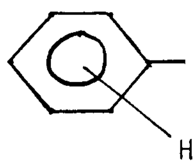

5. Masse à mouler selon les revendications 1 à 4, dans laquelle le composant C est contenu dans la polyamide à raison de 0,5 à 8 mol.-%.